(19) Europäisches Patentamt
European Patent Office
Office européen des brevets

(11) Veröffentlichungsnummer: **0 179 331**
**A2**

(12) # EUROPÄISCHE PATENTANMELDUNG

(21) Anmeldenummer: 85112566.6

(22) Anmeldetag: 04.10.85

(51) Int. Cl.⁴: **D 06 P 1/44**

(30) Priorität: 22.10.84 DE 3438639

(43) Veröffentlichungstag der Anmeldung:
30.04.86 Patentblatt 86/18

(84) Benannte Vertragsstaaten:
BE DE FR GB IT NL

(71) Anmelder: HOECHST AKTIENGESELLSCHAFT
Postfach 80 03 20
D-6230 Frankfurt am Main 80(DE)

(72) Erfinder: Pfeiffer, Gerhard, Dr.
Falkenstrasse 68
D-6232 Bad Soden am Taunus(DE)

(72) Erfinder: Doschke, Erhard
Soltausredder 13a
D-2000 Barsbüttel(DE)

(54) **Verfahren zum Fixieren von Pigmenten auf Fasermaterialien und Flächengebilden.**

(57) Das Belegen von Foulardwalzen bei Pigmentfärbungen und das Zusetzen von Gravuren und Schablonen bei Pigmentdrucken sind in der Praxis häufig auftretende, u.U. erhebliche Kosten verursachende Probleme (Reinigungkosten, Produktionsunterbrechung). Die zur Zeit in der Praxis üblichen Bindersysteme in wäßriger Dispersion neigen mehr oder minder alle zum Belegen bzw. Zusetzen. Erfindungsgemäß wurde nun gefunden, daß sich die genannten Nachteile vermeiden lassen, wenn man für den vorgesehenen Zweck wasserlösliche 2-Komponenten-Bindersysteme einsetzt und sonst bei der Erzeugung der Pigmentfärbungen in der hergebrachten Weise verfährt.



Croydon Printing Company Ltd

Verfahren zum Fixieren von Pigmenten auf Fasermaterialien und Flächengebilden

Es ist bekannt, daß sich Pigmente auf Fasermaterialien und Flächengebilden echt fixieren lassen, wenn man sie aus Druckpasten oder Klotzflotten zusammen mit solchen Substanzen auf die zu bedruckenden oder färbenden Substrate aufbringt, die durch chemische Reaktionen in wasserunlösliche Filme übergeführt werden können.

Bei den eingesetzten filmbildenden Substanzen handelt es sich beispielsweise um Polymerisations-, Polykondensations- oder Polyadditionsprodukte, die für den zuvorgenannten Zweck als wäßrige Dispersionen oder in Form wasserlöslicher Produkte vorliegen können.

Die wasserlösliche Form von Bindersystemen für die Textilpigmentfärbung und den Textilpigmentdruck bietet besondere anwendungstechnische Vorteile, da hier die Gefahr des Belegens von Foulardwalzen und des Zusetzens von Filmdruckschablonen bzw. Rouleauxdruckgravuren und der bleibenden Verhärtung von Druckunterlagen (Mitläufer, Druckdecken) praktisch nicht besteht. Derartige Systeme sind z.B. in den deutschen Patenten 971 871, 1 209 097 und 1 134 963 beschrieben. In den Patentschriften 971 871 und 1 209 097 werden als Bindemittel wäßrige Lösungen von reaktionsfähige Carboxylgruppen enthaltenden, alkalilöslichen Kondensatharzen aus mehrwertigen Säuren und mehrwertigen Alkoholen und als Fixierungsmittel mehrfunktionelle Produkte, die durch Umsetzung von mindestens 2 Molen α,ß-Alkyleniminen mit 1 Mol von Phosphoroxyhalogeniden, Cyanurhalogeniden oder Terephthalsäurehalogeniden erhalten werden, erläutert. Die deutsche Patentschrift 1 134 963 führt als Pigmentbindemittel partiell oder völlig verseifte Pfropfpolymerisate von Vinylestern auf Polyalkylenglykol und als Fixierungsmittel völlig oder teilweise veretherte Aminoplastvorkondensate auf. Der Fixierungsprozeß erfolgt in allen oben

angegebenen Fällen, gegebenenfalls nach einer Zwischentrocknung, durch Trockenhitzebehandlung der mit den Pigmenten und Bindemitteln behandelten Ware in saurem Medium bzw. bei den Verfahren nach DBP 971 871 und DBP 1 209 097 auch durch einen neutralen oder sauren Dämpfprozeß. Nachteilig sind bei dem Verfahren gemäß DBP 971 871 die toxischen Eigenschaften der Phosphor-Derivate und bei dem Verfahren gemäß DBP 1 209 097 die in vielen Fällen ungenügenden Naßechtheiten der Drucke und Färbungen.

Im DBP 1 910 471 wird ein Einkomponenten-Bindersystem in wäßriger Lösung beschriebenen, bestehend aus einem bei Temperaturen oberhalb 130°C mit sich selbst reagierenden Polyester-Präkondensat-Harz, welches durch Reaktion von Carboxyl- und/oder Carbonsäureanhydridgruppen enthaltenden Telomerisaten mit zweibasigen organischen Säuren und Diolen, gegebenenfalls unter Mitverwendung anderer mono- oder polyfunktioneller Alkohole oder Carbonsäuren, nachfolgende Umsetzung mit gegebenenfalls an den Methylolgruppen partiell oder vollständig veretherten Aminoplastvorkondensaten sowie darauf folgende Neutralisation mit Ammoniak oder flüchtigen organischen Aminen erhalten wurde. Nachteilig wirkten sich bei diesem System die komplizierte Herstellung und die stark limitierte Haltbarkeit des Binders aus.

Es wurde nun gefunden, daß man mit Vorteil Pigmentfärbungen und -drucke auf Fasermaterialien und Flächengebilden mit ausgezeichneten Echtheitseigenschaften erhält, wenn man auf das Substrat Klotzflotten oder Druckpasten aufbringt, die neben Pigmenten als Pigment-Bindemittel die wäßrige Lösung eines Kunstharzes, das durch Polykondensation aliphatischer oder aromatischer zwei- oder mehrbasiger Carbonsäuren mit Polyglykolen und anschließende Umsetzung mit Epoxidharz erhalten wird, und als Fixierer die wäßrige Lösung eines nicht plastifizierten Melaminharzes und als

Härtungsmittel potentiell saure Verbindungen enthalten, und die Klotzungen bzw. Drucke, gegebenenfalls nach einer Zwischentrocknung , durch trockenes Erhitzen fixiert.

Von besonderer Bedeutung im Rahmen des vorliegenden Verfahrens ist ein Bindersystem, das sich durch Umsetzung von Adipinsäure mit Polyethylenglykol 3000 und flüssigem Bisphenyldiglycidylether herstellen läßt.

Die Tatsache, daß es sich bei dem oben erwähnten Pigment-Binder und ebenso bei dem zugeordneten Fixierer um wäßrige Lösungen handelt, stellt insofern eindeutig einen technischen Fortschritt dar, da die beiden Komponenten im Gegensatz zu den oben erwähnten Verfahren lagerbeständig und nicht toxisch sind und von Foulardwalzen, Filmdruckschablonen, Rouleauxdruckwalzen, Mitläufern und Druckdecken durch einfaches Spülen mit Wasser restlos entfernt werden können, jedoch andererseits nach dem Fixierungsprozeß Färbungen bzw. Drucke von sehr guten Echtheitseigenschaften und weichem Griff ergeben. Hervorzuheben ist ferner, daß Schwergewebe, die mit dem der Erfindung zugrunde liegenden System gefärbt wurden, wesentlich effizienter hydrophobiert werden können als bei Verwendung der bisher üblichen Pigment-Binder in Dispersion, da der wasserlösliche Binder keine die Hydrophobierung störenden Dispergiermittel enthält.

Das verfahrensgemäß als Bindemittel für die Pigmente verwendete Kunstharz wird durch Umsetzung einer Dicarbonsäure wie Bernsteinsäure oder Phthalsäure, vorzugsweise Adipinsäure, oder deren Anhydride mit Polydiolen, beispielsweise Polyetherglykol mit einem Molekulargewicht von 600 bis 6000 - z.B. Polyethylenglykol oder Polypropylenglykol - vorzugsweise Polyethylenglykol 3000 hergestellt. Dabei wird Polyethylenglykol 3000 mit Adipinsäure zum Halbester verestert. Die restliche Veresterung auf eine Säurezahl

von weniger als 5, vorzugweise unter 2, erfolgt nach Zusatz von Epoxidharz der folgenden Strukturformel:

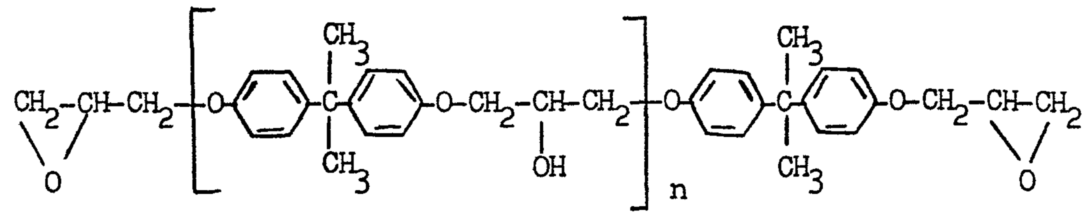

wobei n= 0 - 10, vorzugsweise 0 - 1 bedeutet.

Die endständigen Epoxidgruppen reagieren mit den Carboxylgruppen obigen Halbesters unter Bildung einer Esterbindung und einer Hydroxylgruppe wie folgt:

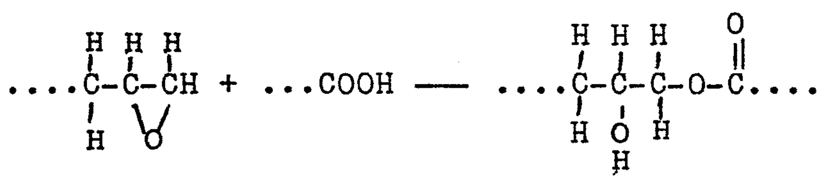

so daß im Molekül verteilt Hydroxylgruppen für die Vernetzung mit Melaminharzen frei sind.

Als Pigmente für das vorliegende Verfahren eignen sich die bekannten Pigmentfarbstoffe anorganischen oder organischen Ursprungs. Beispielsweise seien genannt: Titandioxid, Eisenoxidhydrate, Metallpulver, wie z.B. Aluminium- oder Bronzepulver, ferner Ruß, Ultramarinblau und andere oxidische oder sulfidische anorganische Pigmente, ferner organische Pigmente wie Azopigmente, chinoide und indigoide Küpenfarbstoffe, Phthalocyaninfarbstoffe, Bisoxazinfarbstoffe, Perylentetracarbonsäurefarbstoffe und Chinacridonfarbstoffe, wie sie z.B. in den US-Patentschriften 2 844 484, 2 844 581 und 2 844 485 erläutert sind. Unter Azopigmenten sollen Azofarbstoffe verstanden werden, die durch Kupplung der Diazo- bzw. Tetrazoverbindungen von Aminen ohne wasserlöslich machende Gruppen mit den in der Pigmentchemie üblichen Kupplungskomponenten erhalten werden. Als Kupplungskomponenten kommen beispielsweise in Betracht: Naphthole, Oxynaphthoesäurearylide, Pyrazolone, Acetessigsäurearylide und dergl. Enthalten diese Farbstoffe Sulfonsäure- oder Carbonsäuregruppen, so können sie in Form der mit Erdalkalisalzen hergestellten Farblacke zum Einsatz gelangen. Ferner sind geeignet wasserlösliche Schwefelfarbstoffe, die in Form der Salze ihrer Thiosulfosäure vorliegen, sowie feindispergierte Schwefelfarbstoffe, ferner Dispersionsfarbstoffe, deren chemische Konstitution den Nitramin-, Mono- und disazo-, Anthrachinon-, Styrol- sowie Oxanthen- und Dioxanthenfarbstoffen entspricht.

Die mit dem oben erwähnten Bindersystem angesetzten Färbeflotten enthalten außer Pigment den erfindungsgemäßen Binder und Fixierer im Verhältnis von vorzugsweise 3 : 1, wobei sich die Menge der Kombination nach der Menge des in der Klotzflotte enthaltenen Pigments richtet, und gegebenenfalls als Härtungskatalysatoren potentiell sauer reagierende Substanzen, wie z.B. Ammoniumnitrat, Diammoniumphosphat, Ammoniumoxalat, -acetat, -fluorid, -rhodanid, -chlorid, Weinsäurediethylester und dergl. Die Vernetzung erfolgt zwischen 140°C und 220°C, vorzugsweise bei 150 - 180°C, während 5 bis 2 Minuten. Wird das erfindungsgemäße wasserlösliche Pigment-Binder-System für den Pigment-Druck eingesetzt, so gelten die oben angegebenen Relationen, während als Druckverdickung wäßrige synthetische Verdickungsmittel z.B. auf Basis polymerer Acrylsäuren, in Form der Ammoniumsalze eingesetzt werden.

Als zu färbendes oder zu bedruckendes Material kommen nach dem vorliegenden Verfahren Flächengebilde, wie Folien und Fasermaterialien, wie Gewebe, Gewirke, Faservliese und dergl. in Betracht, beispielsweise auf Basis nativer oder regenerierter Cellulose, acetylierter Cellulose, Wolle,

Seide oder vollsynthetischer Fasern, wie z.B. Polyamid-, Polyester-, Polyacrylnitril-, Polyvinylchloridfasern, ferner Glasfasern oder Asbest. Es können auch Pigmentfärbungen auf Papier, Pappe und Folien aller Art hergestellt werden.

Beispiel 1

Ein Baumwollgewebe wird auf einem Foulard mit einer Färbeflotte der folgenden Zusammensetzung bei einer Flottenaufnahme von 60 % geklotzt:

| | |
|---|---|
| 20 Gewichtsteile/l einer | 32 %igen wäßrigen Dispersion von Kupferphthalocyanin |
| 100 Gewichtsteile/l einer | 40 %igen wäßrigen Lösung des Umsetzungsproduktes aus Adipinsäure, Polyethylenglykol 3000 und Bisphenyldiglycidylether (Binderlösung) |
| 30 Gewichtsteile/l einer | 60 %igen wäßrigen Lösung eines nicht plastifizierten Melaminharzes (Hexamethylether des Hexamethylolmelamins) |
| 20 Gewichtsteile/l einer | 25 %igen wäßrigen Lösung eines Polymerisationsproduktes auf Acrylsäure-Basis als Antimigriermittel |
| 20 Gewichtsteile/l einer | organischen, säureabspaltenden Verbindung (Hydrochlorid eines Aminoalkohols) |

Nach dem Klotzen und Trocknen wird das Textilmaterial 2 Minuten einer Temperatur von 170°C ausgesetzt. Man erhält eine blaue Färbung, die sich durch einen weichen Griff und sehr gute Echtheiten auszeichnet.

Das als Bindemittel fungierende Umsetzungsprodukt aus Adipinsäure, Polyethylenglykol 3000 und Bisphenyldiglycidylether wird folgendermaßen hergestellt:

Eine Schmelze aus

75 Gewichtsteilen Polyethylenglykol (Molekulargewicht ca. 3000) und
5 Gewichtsteilen Adipinsäure

wird bei ca. 170°C unter Vakuum auf eine Säurezahl von 35 verestert.

Nach Zugabe von

10 Gewichtsteilen Bisphenyldiglycidylether (Molekulargewicht ca. 400, Epoxid-Wert ca. 0,54)

hält man unter Normaldruck auf ca. 130°C, bis die Säurezahl unter 2 gesunken ist.

Die Viskosität einer Probe, 1 : 1 mit Wasser verdünnt, beträgt dann ca. 1000 mPa•s.

Nach Zusatz von

134 Gewichtsteilen Wasser erhält man eine ca. 40 gewichtsprozentige Bindemittellösung.

Beispiel 2

Schwergewebe aus Polyester/Baumwolle wird auf einem Foulard mit einer Flotte der folgenden Zusammensetzung (bei 70 % Flottenaufnahme) geklotzt:

| | |
|---|---|
| 50 Gewichtsteile/l einer | 46 %igen wäßrigen Dispersion von chloriertem Kuperphthalocyanin |
| 200 Gewichtsteile/l | der im Beispiel 1 beschriebenen 40 %igen wäßrigen Kunstharzlösung als Bindemittel |

| | | |
|---|---|---|
| 80 | Gewichtsteile/l einer | 25 %igen wäßrigen Lösung eines Polymersiationsproduktes auf Acrylsäure-Basis als Antimigriermittel |
| 25 | Gewichtsteile/l einer | 25 %igen Emulsion eines perfluorierten Polyacrylsäureesters |
| 20 | Gewichtsteile/l einer | 33 %igen wäßrigen Lösung von Diammoniumphosphat |

Nach dem Klotzen und Trocknen wird das Textilmaterial 5 Minuten einer Temperatur von 150°C ausgesetzt. Man erhält eine grüne Färbung von sehr guten Echtheitseigenschaften und einem hohen Hydrophobierungsgrad, der die Verwendung des Stoffes als Material für Zelte, Markisen, Campingartikel und Planen ermöglicht.

Beispiel 3

Ein Baumwollgewebe wird mit einer im folgenden beschriebenen Flotte geklotzt (Flottenaufnahme 70 %):

| | | |
|---|---|---|
| 30 | Gewichtsteile | ® Hydrosol-Blau B (Colour-Index Nr. 53441) werden in |
| 400 | Gewichtsteilen | heißem Wasser gelöst. Nach dem Abkühlen auf 30°C werden |
| 30 | Gewichtsteile | der im Beispiel 1 genannten Melaminharzlösung zugegeben. Hierauf werden |
| 60 | Gewichtsteile | der im Beispiel 1 beschriebenen wäßrigen Binderlösung zugefügt. Schließlich werden |
| 20 | Gewichtsteile | einer 33 %igen wäßrigen Lösung von Diammoniumphosphat zugesetzt. Anschließend wird auf |
| 1 l | | mit Wasser aufgefüllt, geklotzt, getrocknet und 2 Minuten bei 170°C fixiert. |

Man erhält eine blaue Färbung mit guten bis sehr guten Echtheiten.

Beispiel 4

Ein Gewebe aus Polyester wird mit einer Flotte, die auf einen Liter folgende Zusätze enthält, auf einem Foulard geklotzt (Flottenaufnahme 60 %):

| | |
|---|---|
| 30 Gewichtsteile | ®Samaron-Orange HB (Colour-Index Nr. 26080) |
| 30 Gewichtsteile | der in Beispiel 1 beschriebenen wäßrigen Binderlösung |
| 10 Gewichtsteile | der in Beispiel 1 genannten wäßrigen Melaminharzlösung |
| 10 Gewichtsteile einer | 33 %igen Lösung von 2-Methylpropanolhydrochlorid |

Nach dem Klotzen und Trocknen wird das Textilmaterial 1 Minute einer Temperatur von 210°C ausgesetzt. Man erhält eine orangebraune Färbung, die sich durch einen weichen Griff und sehr gute Echtheiten auszeichnet.

Beispiel 5

Ein Gewebe aus Polyamid wird mit einer Druckpaste der folgenden Zusammensetzung bedruckt:

| | |
|---|---|
| 30 Gewichtsteile einer | 42 %igen wäßrigen Dispersion von 5,5-Dichlor-7,7-dimethylthioindigo |
| 150 Gewichtsteile | der in Beispiel 1 erwähnten wäßrigen Binderlösung |
| 50 Gewichtsteile | der in Beispiel 1 erwähnten wäßrigen Melaminharzlösung |
| 130 Gewichtsteile einer | Polyacrylsäure enthaltender Copolymerisat-Dispersion |
| 615 Teile | Wasser |
| 254 Gewichtsteile | 25 %iges Ammoniak |

Nach dem Drucken und Trocknen wird während 2 Minuten bei 170°C fixiert. Es resultiert ein brillanter rotvioletter Druck mit sehr guten Echtheitseigenschaften.

Patentansprüche

1. Verfahren zum Fixieren von Pigmenten auf Fasermaterialien und Flächengebilden mittels härtbarer Kunstharze bzw. Kunstharzvorprodukte, die bei erhöhter Temperatur in Anwesenheit eines sauren oder potentiell sauren Härtungsmittels ausgehärtet werden, dadurch gekennzeichnet, daß man auf das Substrat Klotzflotten oder Druckpasten aufbringt, die neben Pigmenten als Pigment-Bindemittel die wäßrige Lösung eines durch Polykondensation aliphatischer oder aromatischer zwei- oder mehrbasiger Carbonsäuren mit Polyetherdiolen und anschließender Umsetzung mit aliphatischen oder aromatischen Epoxidharzen erhaltenen Kunstharzes und als Fixierer die wäßrige Lösung eines nicht plastifizierten Melaminharzes sowie als Härter potentiell saure Verbindungen enthalten, und nach dem Klotzen bzw. Drucken, gegebenenfalls nach einer Zwischentrocknung, durch trockenes Erhitzen fixiert.

2. Verfahren nach Anspruch 1, dadurch gekennzeichnet, daß man als Bindemittel das Umsetzungsprodukt einer aliphatischen oder aromatischen Dicarbonsäure wie Bernsteinsäure oder Phthalsäure, vorzugsweise Adipinsäure, oder deren Anhydride mit Polydiolen, beispielsweise Polyetherglykol mit einem Molekulargewicht von 600 bis 6000, z.B. Polyethylenglykol oder Polypropylenglykol, vorzugsweise Polyethylenglykol 3000 und einem Epoxidharz der Strukturformel

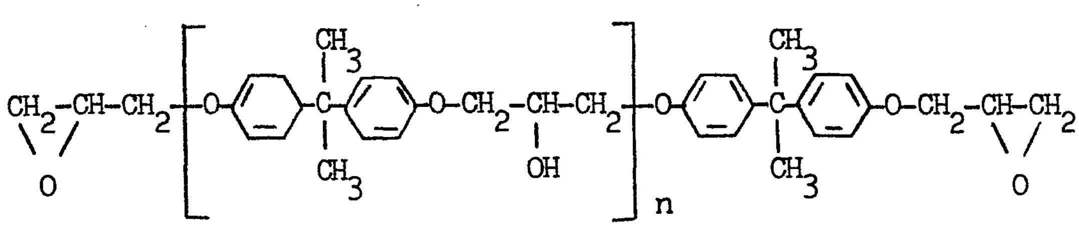

wobei n= 0 - 10, vorzugsweise 0 - 1, bedeutet, sowie als Fixierkomponente die wäßrige oder wassermischbare

Lösung eines Härterharzes, hergestellt aus Phenol-, Harnstoff- oder Melamin-Formaldehydkondensationsprodukten, die gegebenenfalls vollständig oder teilweise an den Methylolgruppe verethert sind, einsetzt.